# EUROPÄISCHE PATENTSCHRIFT

(11) **EP 2 142 818 B1**
(45) Veröffentlichungstag und Bekanntmachung des Hinweises auf die Patenterteilung: **07.09.2011**
(21) Anmeldenummer: 08758027.0
(22) Anmeldetag: 07.05.2008
(51) Int. Cl.: F16D 13/30

(54) **REIBFLÄCHENKUPPLUNG**
FRICTION COUPLING
EMBRAYAGE A SURFACES DE FRICTION

(30) Priorität: 07.05.2007 DE 102007021791
(43) Veröffentlichungstag der Anmeldung: 13.01.2010
(73) Patentinhaber: LICOS Trucktec GmbH, 88677 Markdorf (DE)
(72) Erfinder: WOLF, Andreas, 88069 Tettnang (DE); KRAFFT, Rainer, 88633 Heiligenberg (DE); HEPP, Edgar, 78354 Sipplingen (DE)
(74) Vertreter: Dobler, Markus
(86) Internationale Anmeldenummer: PCT/DE2008/000768
(87) Internationale Veröffentlichungsnummer: WO 2008/135036

(56) Entgegenhaltungen:
- FR-A- 410 578
- GB-A- 125 026
- GB-A- 856 468
- US-A- 4 763 765
- US-A1- 2007 045 077

## Beschreibung

Die Erfindung betrifft eine Reibflächenkupplung nach dem Oberbegriff des Anspruchs 1.

Eine derartige Kupplung ist z.B. aus GB-A-125 026 bekannt.

### Stand der Technik

Zum An- und Abschalten von Luftkompressoren in Kraftfahrzeugen werden heute üblicherweise Mehrflächen-Reibschaltkupplungen verwendet, bei denen Stahl auf Stahl oder Stahl auf beschichtete Lamellen reibschlüssig gekuppelt werden. Die Kupplungen werden entweder pneumatisch, hydraulisch oder elektromagnetisch betätigt. Das maximale übertragbare Drehmoment ist bei derartigen Kupplungssystemen vom Bauvolumen abhängig. Größere zu übertragende Drehmomente erfordern mehr Bauvolumen der Kupplung. Häufig stehen die Drehmomentanforderungen im Widerspruch zum limitierten Einbauraum in modernen "Motorräumen"

### Aufgabe und Vorteile der Erfindung

Der Erfindung liegt die Aufgabe zugrunde, eine Reibflächenkupplung der Eingangs bezeichneten Art bereit zu stellen, die bei einem vergleichbaren Bauvolumen ein hohes Drehmoment schalten kann und wobei die Reibflächerpaare definiert voneinander getrennt werden können.

Diese Aufgabe wird durch die Merkmale des Anspruchs 1 gelöst.

In den abhängigen Ansprüchen sind vorteilhafte und zweckmäßige Weiterbildungen der Erfindung angegeben.

Die Erfindung geht von einer Reibflächenkupplung für insbesondere die Anwendung in Kraftfahrzeugen, z.B. zum Schalten eines Luftkompressors aus. Die Reibflächenkupplung umfasst wenigstens zwei Reibflächen die in Reibschluss bringbar sind. Gemäß der Erfindung sind zwei konusförmige Reibflächenpaare vorgesehen. Dieser Vorgehensweise liegt die Erkenntnis zugrunde, dass sich bei vergleichbarem Bauvolumen mit einem konusförmigen Reibflächenpaar ein höheres Drehmoment übertragen lässt als mit einer herkömmlichen Mehrflächenreibschaltkupplung. Bei einem konusförmigen Reibflächenpaar liegt vorzugsweise in einem Innenkonus-Reibflächenelement ein Außenkonus-Reibflächenelement, so dass es radial zu einer Überdeckung der Reibflächen kommt. Die Achsen der Reibflächenelemente stehen vorteilhafterweise fluchtend zueinander. Die Neigungswinkel von Innenkonus-Reibfläche und Außenkonus-Reibfläche sind vorzugsweise zumindest annähernd übereinstimmend. Je kleiner ein Neigungswinkel der Konusse zu den Konusachsen ist, desto geringer ist ein axialer Kraftaufwand, um eine vorgegebene Flächenpressung der Reibflächen zueinander erzielen. Dementsprechend kann mit einer relativ kleinen Anpresskraft ein im Vergleich zu einer Mehrflächenreibscheibenkupplungen größeres Drehmoment übertragen werden, was sich letztlich positiv auf das notwendige Bauvolumen der Kupplung auswirkt.

Dieses Prinzip lässt sich besonders vorteilhaft ausnutzen, wenn zwei derartige konusförmige Reibflächenpaare zur Anwendungen. Dann können die Reibflächenpaare so angeordnet werden, dass sich Reibflächenelemente gegeneinander abstützen können.

Denkbar ist auch die Verwendung von mehr als zwei konusförmigen Reibflächenpaaren in einer Kupplungsanordnung.

Diese können axial fluchtend zueinander angeordnet sein.

In einer besonders bevorzugten Ausgestaltung der Erfindung bilden zwei konusförmige Reibflächenpaare im nicht angesteuerten Zustand der Kupplung einen Reibschluss aus. Dass heißt ohne Kupplungsbetätigung ist die Kupplung geschaltet.

Im Weiteren ist es vorteilhaft, wenn ein Reibschluss der zwei konusförmigen Reibflächenpaare durch eine einseitige Kraftbetätigung lösbar ist. Dies kann beispielsweise dadurch gelöst werden, dass die konusförmigen Reibflächenpaare mit axial fluchtenden Konusachsen angeordnet sind. Dadurch ist die Möglichkeit gegebenen, das sich Reibflächenpaare gegeneinander abspreizen können. Damit kann eine einseitige Betätigung der Kupplung ausreichen, um beide Reibflächenpaare in Reibschluss zu bringen bzw. voneinander zu lösen.

In diesem Zusammenhang ist es außerdem bevorzugt, wenn die zwei konusförmigen Reibflächenpaare auf einer Achse derart benachbart liegen, dass sich die Konusflächen des jeweiligen Reibflächenpaar nach außen neigen.

Insbesondere für den Fall, dass Elemente, die die Innenkonus-Reibflächen der Reibflächenpaare tragen, miteinander gekoppelt sind und zudem die Konusflächen sich nach außen hin zu der Konusachse neigen, können sich Elemente, welche die Außenkonusflächen tragen und konzentrisch in den Innenkonus-Reibflächenelementen angeordnet sind, an den Innenkonus-Reibflächenelementen abstützen. Die Kupplung kann im Hinblick auf "Schaltkräfte" nach außen in diesem Fall sozusagen "kraftneutral" ausgebildet werden. Dementsprechend ist es nicht erforderlich, dass z.B. im geschalteten Zustand weitere Elemente auf einer Montageachse axiale Anschlagkräfte aufnehmen müssen, um die Anpresskraft der Reibflächen aufrecht zu erhalten.

Im Weiteren sind gemäß der Erfindung Innenkonus-Reibflächenelemente verschiebbar axial gelagert. Damit können sich die Innenkonus-Reibflächenelemente durch axiales Verschieben gegenüber Außenkonus-Reibflächenelementen selbsttätig positionieren.

Vorzugsweise ist zumindest ein Außenkonus-Reibflächenelement entlang einer Symmetrieachse des Konus ebenfalls axial verschiebbar gelagert. Hingegen ist es bevorzugt, wenn ein weiteres Außenkonus-Reibflächenelement axial zumindest einseitig festgelegt ist. Damit kann durch Verschieben des axial verschiebbaren Außenkonus-Reibflächenelements die Kupplung geschaltet und gelöst werden.

In einer außerdem bevorzugten Ausgestaltung der Erfindung werden die Außenkonus-Reibflächenelemente über Spreizmittel auseinandergedrückt. Sofern dabei die Außenkonus-Reibflächenelemente am jeweiligen Innenkonus-Reibflächenelement durch die Spreizbewegung zur Anlage kommen, befindet sich die Kupplung im Reibschluss.

Zur Herbeiführung der Spreizbewegung ist es vorteilhaft, wenn zwischen den Außenkonus-Reibflächenelementen von zwei benachbart liegenden Reibflächenpaaren eine unter Vorspannung stehende Feder angeordnet ist.

Um den Reibschluss von zwei benachbart liegenden Reibflächenpaaren zu lösen, wird außerdem vorgeschlagen, dass die wenigstens zwei Reibflächenpaare über eine Betätigungseinrichtung, z.B. einen Druckkolben betätigbar sind. Beispielsweise drückt der Druckkolben auf das axial verschiebbare Außenkonus-Reibflächenelement gegen die Kraft einer Spreizfeder, so dass sich bei festliegendem zweiten Außenkonus-Reibflächenelement der axiale Abstand der beiden Außenkonus-Reibflächenelemente verringert und sich damit der Reibschluss zu den Innenkonus-Reibflächenelementen auflöst.

Um die Reibflächenpaare definiert voneinander trennen zu können, ist bei einer axialen Verschiebbarkeit eines innenliegenden Außenkonus-Reibflächenelements gemäß der Erfindung zwischen miteinander gekoppelten Innenkonus-Reibflächenelementen der zwei Reibflächenpaare ein Anschlag für das axial verschiebbare innenliegende Außenkonus-Reibflächenelement ausgebildet.

Wird der Abstand der innenliegenden Außenkonus-Reibflächenelementen durch axiales Verschieben des axial verschiebbaren Außenkonus-Reibflächenelements verringert, kann dieses Außenkonus-Reibflächenelement auf den Anschlag an den gekoppelten Innenkonus-Reibflächenelementen treffen und die gekoppelten Innenkonus-Reibflächenelemente axial verschieben, so dass sich auch das Reibflächenpaar voneinander trennt, bei welchen ein Außenkonus-Reibflächenelement axial zumindest einseitig fixiert ist.

Wie oben erwähnt, kann durch die Neigung der Konusflächen zur Symmetrieachse der jeweiligen Konusse bei konstanter axialer Kupplungskraft die Flächenpressung der Reibflächen eingestellt werden. Vorzugsweise sollte die Neigung der Konusreibflächen in einem Bereich von ca. 5° bis 10° liegen.

Um die Reibflächen zu schützen, ist es außerdem bevorzugt, dass die Reibflächenpaare in einem Kupplungsgehäuse gelagert sind, dass an einer Welle angebracht ist, über welche die Drehmomentübertragung stattfinden soll. Die Innenkonus-Reibflächenelemente sind in einem derartigen Gehäuse vorzugsweise über eine Verzahnung axial verschiebbar gelagert. Beispielsweise kommt eine Bogenverzahnung zum Einsatz.

Die Innenkonus-Reibflächenelemente sind im Weiteren vorteilhafterweise als Kreisringe ausgebildet, in welchen die Außenkonus-Reibflächenelemente liegen, die ebenfalls kreisringförmig sind. Ggf. setzen sich die Reibflächenelemente auch aus Ringabschnitten zusammen.

### Beschreibung des Ausführungsbeispiels

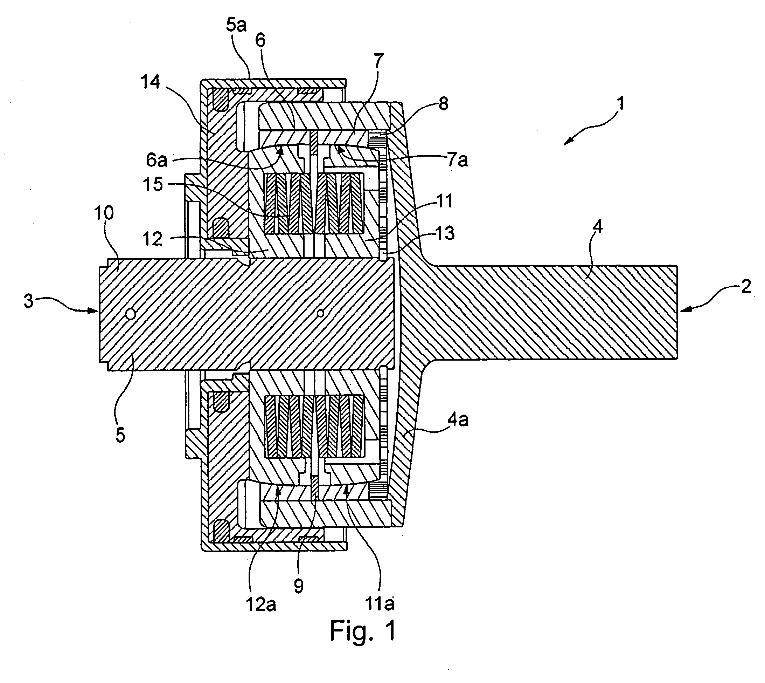

Die Figur zeigt eine Doppelkonusreibflächenkupplung 1 mit einer Antriebsseite 2 und einer Abtriebsseite 3 in einem schematischen Schnittbild. Auf der Antriebsseite 2 ist eine Antriebswelle 4 vorhanden, an welcher ein schalenförmiges Kupplungsgehäuse 4a ausgebildet ist. Auf der Innenseite eines zylinderförmigen Mantels des Kupplungsgehäuses 4a sind Innenkonuselemente 6 und 7 angeordnet. Eine radiale Verdrehung der Innenkonuselemente 6 und 7 wird durch eine Verzahnung 8 zwischen dem Kupplungsgehäuse 4a und den Innenkonuselementen 6, 7 unterbunden. Die Verzahnung 8 ist axial ausgerichtet, so dass eine axiale Verschiebung der Innenkonuselemente 6, 7 zum Kupplungsgehäuse 4a nach wie vor ermöglicht ist.

Die Innenkonuselemente 6 und 7 bilden eine Einheit. Zwischen den Innenkonuselementen ist ein Anschlagring 9 vorgesehen. In das Kupplungsgehäuse 4a reicht eine Abtriebswelle hinein, auf der in azimutaler Richtung nicht gegen die Abtriebswelle verdrehbar Außenkonuselemente 11 und 12 angeordnet sind. Die Außenkonuselemente 11 und 12 liegen derart innerhalb der Innenkonuselemente 6 und 7, dass eine Überlappung von Innenkonus-Reibflächen 6a, 7a sowie Außenkonus-Reibflächenelementen 11a, 12a stattfindet.

Das Außenkonuselement 12 ist axial verschiebbar, wogegen einseitig eine axiale Verschiebung des Außenkonuselements 11 durch ein Anschlagelement 13 auf der Abtriebswelle 5 blockiert ist.

Auf die Konuselementanordnung kann ein Druckzylinder 14 einwirken, der beispielsweise Druckluft betätigt ist. Dieser ist in einem Gehäuse 5a gelagert, das nicht mit der Antriebswelle 5 verbunden ist.

Die Außenkonuselemente 11, 12 werden über Federpakte 15 auseinandergedrückt, so dass deren Außenkonus-Reibflächen 11a, 12a einen Reibschluss mit den Innenkonus-Reibflächen 6a, 7a der Innenkonuselemente 6, 7 eingehen. Durch einen vergleichsweise flachen Neigungswinkel der Konusreibflächen kann über die Federpakete 5 eine hohe Flächenpressung zwischen den Reibflächen 6a, 12a bzw. 7a, 12a erzeugt werden. In diesem Zustand ist die Kupplung geschaltet und ein Drehmoment kann von der Antriebsseite 2 auf die Abtriebsseite 3 übertragen werden. Dabei passen sich die verbundenen Innenkonuselemente 6, 7 mit ihren Innenkonus-Reibflächen 6a, 7a in der axialen Position durch ihre axiale Verschiebbarkeit den Außenkonuselementen 11, 12 mit ihren Außenkonus-Reibflächen 11a, 12a an.

Um die Kupplung zu lösen, wird der Druckzylinder 14 betätigt, wodurch das Außenkonuselement 12 in Richtung des anderen Außenkonuselements 11 unter Zusammenpressen der Federpakete 15 geschoben wird. Dadurch lösen sich zunächst die Reibflächen 6a und 12a. Sobald bei der axialen Verschiebung das Außenkonuselement 12 am Anschlagring 9 anstößt, werden die Innenkonuselemente 6, 7 in Richtung Abtriebseite 2 verschoben, wodurch sich auch die Reibflächen 7a sowie 11a definiert voneinander lösen. In diesem Zustand ist die Kupplung ausgeschaltet, eine Drehmomentübertragung von der Antriebsseite 2 auf die Abtriebseite 3 findet nicht statt.

Sobald eine Anpresskraft durch den Druckzylinder 14 auf das Außenkonuselement 12 entfällt, drücken die Federpakete 15 die Außenkonuselemente 11 und 12 soweit auseinander, dass die Reibflächen 6a bzw. 12a sowie 7a bzw. 11a in Reibschluss kommen. Die Kupplung ist geschaltet.

## Patentansprüche

1. Reibflächenkupplung (1), insbesondere für die Anwendung in Kraftfahrzeugen, z.B. zum Schalten eines Luftkompressors, bei welcher wenigstens zwei Reibflächen (6a, 12a, 7a, 11a) in Reibschluss bringbar sind, wobei zwei konusförmige Reibflächenpaare (6a, 12a, 7a, 11a) vorgesehen sind, deren Innenkonus-Reibflächenelemente (6, 7) axial verschiebbar gelagert und miteinander gekoppelt sind, **dadurch gekennzeichnet, dass** an den Innenkonus-Reibflächenelementen (6, 7) ein Anschlag für zumindest ein Außenkonus-Reibflächenelement (12) ausgebildet ist.

2. Kupplung nach Anspruch 1, **dadurch gekennzeichnet, dass** die zwei konusförmigen Reibflächenpaare (6a, 12a, 7a, 11a) im nicht angesteuerten Zustand der Kupplung einen Reibschluss ausbilden.

3. Kupplung nach einem der vorhergehenden Ansprüche, **dadurch gekennzeichnet, dass** ein Reibschluss der zwei konusförmigen Reibflächenpaare (6a, 12a, 7a, 11a) durch eine einseitige Kraftbetätigung lösbar ist.

4. Kupplung nach einem der vorhergehenden Ansprüche, **dadurch gekennzeichnet, dass** beim jeweiligen Reibflächenpaar eine Reibfläche (6a, 7a) an einem Innenkonus-Reibflächenelement (6, 7) und die zweite Reibfläche (11a, 12a) an einem Außenkonus-Reibflächenelement (11, 12) ausgebildet ist, wobei ein Außenkonus-Reibflächenelement (11, 12) in einem Innenkonus-Reibflächenelement (6, 7) liegt.

5. Kupplung nach einem der vorhergehenden Ansprüche, **dadurch gekennzeichnet, dass** die konusförmigen Reibflächenpaare (6a, 12a, 7a, 11a) mit axial fluchtenden Konusachsen angeordnet sind.

6. Kupplung nach einem der vorhergehenden Ansprüche, **dadurch gekennzeichnet, dass** die zwei konusförmigen Reibflächenpaare (6a, 12a, 7a, 11a) auf einer Achse derart benachbart liegen, dass sich die Konusflächen (6a, 12a, 7a, 11a) des jeweiligen Reibflächenpaares nach außen zur Konusachse neigen.

7. Kupplung nach einem der vorhergehenden Ansprüche, **dadurch gekennzeichnet, dass** ein Außenkonus-Reibflächenelement (12) entlang einer Symmetrieachse des Konus axial verschiebbar gelagert ist.

8. Kupplung nach einem der vorhergehenden Ansprüche, **dadurch gekennzeichnet, dass** die Außenkonus-Reibflächenelemente (11, 12) über Spreizmittel auseinander gedrückt werden.

9. Kupplung nach einem der vorhergehenden Ansprüche, **dadurch gekennzeichnet, dass** zwischen den Außenkonus-Reibflächenelementen (11, 12) von zwei benachbart liegenden Reibflächenpaaren eine unter Vorspannung stehende Feder angeordnet ist.

10. Kupplung nach einem der vorhergehenden Ansprüche, **dadurch gekennzeichnet, dass** die zwei Reibflächenpaare (6a, 12a, 7a, 11a) über eine Betätigungseinrichtung betätigbar sind.

11. Kupplung nach einem der vorhergehenden Ansprüche, **dadurch gekennzeichnet, dass** die Reibflächenpaare (6a, 12a, 7a, 11a) in einem Kupplungsgehäuse (4a) gelagert sind.

12. Kupplung nach einem der vorhergehenden Ansprüche, **dadurch gekennzeichnet, dass** die Innenkonus-Reibflächenelemente (6, 7) über eine Verzahnung axial verschiebbar gelagert sind.

13. Kupplung nach einem der vorhergehenden Ansprüche, **dadurch gekennzeichnet, dass** die Neigung der Konusreibflächen (6a, 7a, 11a, 12a) zu einer Konusachse im Bereich von 5° bis 10° liegt.

## Claims

1. Friction coupling (1), in particular for use in motor vehicles, e.g. for operating an air compressor, in which at least two friction surfaces (6a, 12a, 7a, 11a) are brought into frictional connection, comprising two conical friction surface pairs (6a, 12a, 7a, 11a), the inner cone friction surface elements (6, 7) of which are mounted In an axially displaceable manner and are coupled to one another, **characterised in that** on the inner cone friction surface elements (6, 7) a stop is formed for at least one outer cone friction surface element (12).

2. Coupling according to claim 1, **characterised in that** the two conical friction surface pairs (6a, 12a, 7a, 11 a) form a frictional connection when the coupling is in an inactivated condition.

3. Coupling according to one of the preceding claims, **characterised in that** a frictional connection between the two conical friction surface pairs (6a, 12a, 7a, 11 a) can be released by force actuation from one side.

4. Coupling according to one of the preceding claims, **characterised in that** for each respective friction surface pair, a friction surface (6a, 7a) is formed on an inner cone friction surface element (6, 7) and the second friction surface (11a, 12a) is formed on an outer cone friction surface element (11, 12), and an outer cone friction surface element (11, 12) is positioned in an inner cone friction surface element (6, 7).

5. Coupling according to one of the preceding claims, **characterised in that** the conical friction surface pairs (6a, 12a, 7a, 11 a) are arranged with their cone axes in axial alignment.

6. Coupling according to one of the preceding claims, **characterised in that** the two conical friction surface pairs (6a, 12a, 7a, 11a) lie adjacent to one another on an axis, such that the cone surfaces (6a, 12a, 7a, 11 a) of the respective friction surface pair are inclined outwards relative to the cone axis.

7. Coupling according to any one of the preceding claims, **characterised in that** an outer cone friction surface element (12) is mounted such that it is axially displaceable along an axis of symmetry of the cone.

8. Coupling according to any one of the preceding claims, **characterised in that** the outer cone friction surface elements (11, 12) are pushed apart by spreading means.

9. Coupling according to one of the preceding claims, **characterised in that** a prestressed spring is arranged between the outer cone friction surface elements (11, 12) of two adjacent friction surface pairs.

10. Coupling according to any one of the preceding claims, **characterised in that** the two friction surface pairs (6a, 12a, 7a, 11a) can be activated by an actuating device.

11. Coupling according to one of the preceding claims, **characterised in that** the friction surface pairs (6a, 12a, 7a, 11a) are mounted in a coupling housing (4a).

12. Coupling according to one of the preceding claims, **characterised in that** the inner cone friction surface elements (6, 7) are mounted to be axially displaceable by means of a toothing mechanism.

13. Coupling according to one of the preceding claims, **characterised in that** the inclination of the cone friction surfaces (6a, 7a, 11 a, 12a) relative to a cone axis is in a range of from 5° to 10°.

## Revendications

1. Embrayage à surfaces de friction (1) notamment destiné à des véhicules automobiles, par exemple pour commuter un compresseur d'air, dans lequel au moins deux surfaces de friction (6a, 12a, 7a, 11a) peuvent être mises en liaison par friction,
* deux paires de surfaces de friction de forme conique (6a, 12a, 7a, 11a) étant prévues dont les éléments de surfaces de friction coniques intérieurs (6, 7) sont montés coulissants axialement et sont couplés l'un à l'autre,
embrayage **caractérisé en ce que**
les éléments de surfaces de friction coniques intérieurs (6, 7) comportent une butée pour au moins un élément de surface de friction conique extérieur (12).

2. Embrayage selon la revendication 1,
**caractérisé en ce que**
les deux paires de surfaces de friction de forme conique (6a, 12a, 7a, 11a) réalisent une liaison par friction lorsque l'embrayage est dans son état non commandé.

3. Embrayage selon l'une des revendications précédentes,
**caractérisé en ce qu'**
une liaison par friction des deux paires de surfaces de friction de forme conique (6a, 12a, 7a, 11a) peut être ouverte par un actionnement unilatéral par une force.

4. Embrayage selon l'une des revendications précédentes,
**caractérisé en ce que**
pour chacune des paires de surfaces de friction, une surface de friction (6a, 7a) est réalisée sur un élément de surfaces de friction conique intérieur (6, 7) et la seconde surface de friction (11a, 12a) est réalisée sur un élément de surface de friction conique extérieur (11, 12),
* un élément de surfaces de friction conique extérieur (11, 12) étant situé dans un élément de surfaces de friction conique intérieur (6, 7).

5. Embrayage selon l'une des revendications précédentes,
**caractérisé en ce que**
les paires de surfaces de friction de forme conique (6a, 12a, 7a, 11a) ont des axes de cône coaxiaux.

6. Embrayage selon l'une des revendications précédentes,
**caractérisé en ce que**
les deux paires de surfaces de friction de forme conique (6a, 12a, 7a, 11a) sont situées au voisinage l'une de l'autre sur un axe de façon que les surfaces coniques (6a, 12a, 7a, 11a) de chacune des paires de surfaces de friction respectives soient inclinées vers l'extérieur par rapport à l'axe du cône.

7. Embrayage selon l'une des revendications précédentes,
**caractérisé en ce qu'**
un élément de surfaces de friction conique extérieur (12) est monté coulissant axialement le long de l'axe de symétrie du cône.

8. Embrayage selon l'une des revendications précédentes,
**caractérisé en ce que**
les éléments de surfaces de friction coniques extérieurs (11, 12) sont écartés l'un de l'autre par des moyens d'écartement.

9. Embrayage selon l'une des revendications précédentes,
**caractérisé en ce qu'**
un ressort sous précontrainte est monté entre les éléments de surfaces de friction coniques extérieurs (11, 12) de deux paires de surfaces de friction voisines.

10. Embrayage selon l'une des revendications précédentes,
**caractérisé en ce que**
les deux paires de surfaces de friction (6a, 12a, 7a, 11a) sont actionnées par l'intermédiaire d'une installation d'actionnement.

11. Embrayage selon l'une des revendications précédentes,
**caractérisé en ce que**
les paires de surfaces de friction (6a, 12a, 7a, 11a) sont logées dans un boîtier d'embrayage (4a).

12. Embrayage selon l'une des revendications précédentes,
**caractérisé en ce que**
les éléments de surfaces de friction coniques intérieurs (6, 7) sont montés coulissants axialement par l'intermédiaire d'une denture.

13. Embrayage selon l'une des revendications précédentes,
**caractérisé en ce que**
l'inclinaison des surfaces de friction coniques (6a, 7a, 11a, 12a) est de l'ordre de 5° à 10° par rapport à l'axe du cône.
